# EUROPÄISCHE PATENTSCHRIFT

(11) **EP 3 453 001 B1**
(45) Veröffentlichungstag und Bekanntmachung des Hinweises auf die Patenterteilung: **06.05.2020**
(21) Anmeldenummer: 17713217.2
(22) Anmeldetag: 22.03.2017
(51) Int. Cl.: G08B 17/12

(54) **DETEKTIONSVORRICHTUNG, VERFAHREN ZUR DETEKTION EINES EREIGNISSES UND COMPUTERPROGRAMM**
DETECTION DEVICE, METHOD FOR DETECTION OF AN EVENT, AND COMPUTER PROGRAM
DISPOSITIF DE DÉTECTION, PROCÉDÉ DE DÉTECTION D'UN ÉVÉNEMENT ET PROGRAMME INFORMATIQUE

(30) Priorität: 04.05.2016 DE 102016207712
(43) Veröffentlichungstag der Anmeldung: 13.03.2019
(73) Patentinhaber: Robert Bosch GmbH, 70442 Stuttgart (DE)
(72) Erfinder: STADLER, Anton, 83233 Bernau (DE); WITTMANN, Soeren, 86444 Affing (DE); EBLING, Julia, 31139 Hildesheim (DE)
(86) Internationale Anmeldenummer: PCT/EP2017/056760
(87) Internationale Veröffentlichungsnummer: WO 2017/190882

(56) Entgegenhaltungen:
- WO-A2-02/054364
- DE-A1-102012 213 125
- DE-A1-102014 219 838
- DE-U1- 20 022 869

## Beschreibung

### Stand der Technik

Die Erfindung betrifft eine Detektionsvorrichtung zur Detektion eines Ereignisses in einem Überwachungsbereich, mit einer Kameraschnittstelle zur Übernahme mindestens eines Bildes, wobei das mindestens eine Bild den Überwachungsbereich zeigt, mit einer Bildanalyseeinheit, wobei die Bildanalyseeinheit ausgebildet ist, auf Basis des Bildes zu einer beliebigen Position im Überwachungsbereich Ereigniskenndaten zu bestimmen, mit einer Alarmeinheit mit Alarmkenndaten, wobei die Alarmeinheit ausgebildet ist, auf Basis eines Vergleiches der Alarmkenndaten mit den Ereigniskenndaten einen Alarm auszugeben, mit einer Speichereinheit, wobei die Speichereinheit ausgebildet ist, zu jeder Position im Überwachungsbereich die Ereigniskenndaten zu speichern. Die Erfindung betrifft ferner ein Verfahren zur Detektion eines Ereignisses in einem Überwachungsbereich sowie ein Computerprogramm.

Eine Vielzahl von Detektionssystemen basiert auf der kamera- und/oder videobasierten Detektion von Ereignissen. Insbesondere finden solche Detektionssysteme Anwendung in Brandmeldern. Beispielsweise sind mittlerweile eine Vielzahl solcher Brandmelder bekannt geworden, welche mittels Bildverarbeitung einen Brand über aussagekräftige Brandmerkmale detektieren.

Beispielsweise offenbart die Druckschrift DE 10 2014 219 838 A1 eine Rauchdetektionsvorrichtung zur Detektion von Rauch eines Brandes in einem Überwachungsbereich, wobei die Rauchdetektionsvorrichtung ein Auswertemodul umfasst, welches eine erste Bewegungsschätzung zur Bestimmung einer Bewegung eines Rauchabschnittes im Überwachungsbereich auf Basis von zwei Einzelbildern durchführt, wobei die zwei Einzelbilder einen ersten zeitlichen Abstand zueinander aufweisen.

Die Druckschrift DE 10 2012 213 125 A1, die den nächstkommenden Stand der Technik bildet, beschreibt ein Brandüberwachungssystem mit mindestens einer ersten und einer zweiten Überwachungskamera zur Ausgabe von Überwachungsbildern. Die Überwachungskameras bilden einen gemeinsamen Überlappbereich ab. Eine Auswerteeinrichtung ist ausgebildet, einen Brand basierend auf den Überwachungsbildern zu erkennen, wobei die Auswerteeinrichtung zur Ausgabe einer Positionsinformation des Brandes basierend auf den Überwachungsbildern ausgebildet ist.

### Offenbarung der Erfindung

Im Rahmen der Erfindung wird eine Detektionsvorrichtung mit den Merkmalen des Anspruchs 1, ein Verfahren mit den Merkmalen des Anspruchs 13 sowie ein Computerprogramm mit den Merkmalen des Anspruchs 14 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Detektionsvorrichtung vorgeschlagen, welche zur Detektion eines Ereignisses in einem Überwachungsbereich ausgebildet und/oder geeignet ist. Das Ereignis ist beispielsweise ein Feuer, ein Brand oder Rauch. Alternativ oder ergänzend kann das Ereignis eine sich bewegende Person und/oder ein sich bewegendes Tier im Überwachungsbereich sein. Bei dem Überwachungsbereich kann es sich um einen geschlossenen Überwachungsbereich wie zum Beispiel einen Raum in einem Haus und/oder eine Halle einer Fabrik handeln. Alternativ kann der Überwachungsbereich ein Freibereich sein, wie zum Beispiel ein Parkplatz. Die Detektionsvorrichtung ist insbesondere als eine digitale Datenverarbeitungseinrichtung, wie zum Beispiel ein Computer, ein Mikrocontroller, etc. ausgebildet.

Die Detektionsvorrichtung umfasst eine Kameraschnittstelle zur Übernahme mindestens eines Bildes, wobei das mindestens eine Bild den Überwachungsbereich zeigt. Die Kameraschnittstelle kann als eine interne oder als eine externe Kameraschnittstelle ausgebildet sein. Die Übernahme des mindestens einen Bildes durch die Kameraschnittstelle kann kabellos oder kabelgebunden erfolgen. Vorzugsweise ist die Kameraschnittstelle als eine Funkschnittstelle ausgebildet. Insbesondere kann die Kameraschnittstelle eine Netzwerkverbindung darstellen. Vorzugsweise übernimmt die Kameraschnittstelle eine Bildfolge, wobei die Bildfolge mehrere Einzelbilder als Bilder umfasst.

### (Fortsetzung ursprüngliche Seite 3)

Insbesondere zeigen die Einzelbilder den Überwachungsbereich und vorzugsweise zeigen alle Einzelbilder jeweils einen gleichen Abschnitt des Überwachungsbereiches. Das mindestens eine Bild des Überwachungsbereiches kann von einer Überwachungskamera, insbesondere einer stationären Überwachungskamera, bereitgestellt werden. Die Überwachungskamera ist beispielsweise ausgebildet, als eine Kamera die im sichtbaren Bereich Bilder aufzeichnet oder eine Infrarotkamera. Das mindestens eine Bild wird insbesondere als ein digitales Bild bereitgestellt. Das mindestens eine Bild kann als ein Schwarz-Weiß-Bild, als ein Graustufenbild, und/oder als ein Farbbild ausgebildet sein.

Die Detektionsvorrichtung umfasst eine Bildanalyseeinheit, wobei die Bildanalyseeinheit ausgebildet ist, auf Basis des mindestens einen Bildes zu einer beliebigen Position im Überwachungsbereich Ereigniskenndaten zu bestimmen. Die Bildanalyseeinheit ist vorzugsweise als ein Softwaremodul realisiert. Alternativ kann die Bildanalyseeinheit auch hardwaretechnisch realisiert sein. Vorzugsweise ist die Bildanalyseeinheit ausgebildet, den Überwachungsbereich zu Rasterposition zu rastern und den Rasterpositionen im Überwachungsbereich Positionskoordinaten zuzuordnen. Das Rastern erfolgt beispielsweise matrixartig. Insbesondere kann jeder Position im Überwachungsbereich eine Rasterposition zugeordnet werden, wobei somit jeder Position im Überwachungsbereich in Rasterkoordinaten beschrieben werden kann. Insbesondere bestimmt die Bildanalyseeinheit zu jeder Rasterposition die Ereigniskenndaten.

Die Ereigniskenndaten sind insbesondere Daten, die das zu detektierende Ereignis im Überwachungsbereich aussagekräftig charakterisieren. Vorzugsweise kann über die Ereigniskenndaten ein Ereignis von einem Fehlerereignis unterschieden werden, wobei ein Fehlerereignis beispielsweise ein Ereignis ist, das für die Detektionsvorrichtung Ähnlichkeiten mit einem zu detektierenden Ereignis aufweist. Zur Detektion von Feuer und/oder eines Brandes im Überwachungsbereich können die Ereigniskenndaten beispielsweise die spektrale Verteilung der Intensität der thermischen Strahlung umfassen. Zur Detektion von sich bewegenden Tieren und/oder Personen im Überwachungsbereich können die Ereigniskenndaten beispielsweise die Geschwindigkeit des sich bewegenden Objektes als Absolutbetrag und als Richtungsvektor umfassen.

Die Detektionsvorrichtung umfasst eine Alarmeinheit, wobei die Alarmeinheit Alarmkenndaten umfasst und/oder hinterlegt hat. Die Alarmeinheit ist programmtechnisch und/oder hardwaretechnisch umgesetzt. Vorzugsweise ist die Alarmeinheit mit der Bildanalyseeinheit in einer gemeinsamen Auswerteeinheit zusammengefasst. Die Alarmeinheit ist ausgebildet, auf Basis eines Vergleiches der Alarmkenndaten mit den Ereigniskenndaten einen Alarm auszugeben. Beispielsweise sind die Alarmkenndaten als Grenzwerte zu verstehen, deren Über- und/oder Unterschreiten durch die Ereigniskenndaten zum Ausgeben eines Alarmes führen. Beispielsweise sind die Alarmkenndaten eine maximale spektrale Temperatur, eine maximale Geschwindigkeit eines sich bewegenden Objektes und/oder eine Turbolenz in einem bewegenden Objekt. Insbesondere können die Alarmkenndaten abhängig von der Position im Überwachungsbereich sein und/oder für alle Positionen im Überwachungsbereich gleich gewählt sein.

Die Detektionsvorrichtung umfasst eine Speichereinheit, wobei die Speichereinheit ausgebildet ist, zu einer Position im Überwachungsbereich die Ereigniskenndaten zu speichern. Die Speichereinheit kann als eine interne oder eine externe Speichereinheit ausgebildet sein. Vorzugsweise ist die Speichereinheit eine Datenspeichereinheit. Insbesondere ist die Speichereinheit als eine interne und/oder externe Festplatte, als ein USB-Speichermedium, als eine Speicherkarte, als eine CD oder DVD ausgebildet. Vorzugsweise speichert die Speichereinheit zu jeder Position im Überwachungsbereich und/oder Rasterposition die Ereigniskenndaten. Vorzugsweise ist die Speichereinheit ausgebildet, die Ereigniskenndaten zu einer Position mit einem Zeitstempel zu versehen, sodass für eine Position beispielsweise der zeitliche Verlauf der Ereigniskenndaten hinterlegt ist.

Die Detektionsvorrichtung umfasst eine Berechnungseinheit zur Berechnung und/oder zur Festlegung von mindestens einem Fehlerereignisbereich auf Basis der Ereigniskenndaten und der Alarmkenndaten. Der Fehlerereignisbereich ist ein Bereich des Überwachungsbereiches, in dem ein zu detektierendes Ereignis für die gewählten Alarmkenndaten detektiert wird, obwohl das Ereignis tatsächlich nicht eingetreten ist. Beispielsweise ist der Fehlerereignisbereich ein Bereich mit einer flackernden Lichtquelle, insbesondere Leuchtstoffröhre, in dem fälschlicherweise von der Detektionsvorrichtung ein Brand aufgrund des flackernden Lichtes detektiert wird. Für zu detektierende Personen und/oder Tiere im Überwachungsbereich kann ein Fehlerereignis beispielsweise durch sich bewegende Schatten und/oder fallendes Laub gebildet werden. Die Berechnungseinheit kann softwaretechnisch oder hardwaretechnisch gebildet werden. Insbesondere kann die Berechnungseinheit zusammen mit der Speichereinheit und/oder der Alarmeinheit und/oder der Bildanalyseeinheit eine gemeinsame Auswerteeinheit bilden. Die Berechnungseinheit berechnet und/oder legt einen Fehlerereignisbereich fest, auf Basis des Wissens, das beispielsweise von einem Nutzer bereitgestellt wurde, dass für alle bisher gespeicherten Ereigniskenndaten das Ereignis nicht eingetreten ist.

Die Detektionsvorrichtung umfasst eine Maskierungseinheit zum automatischen Verändern der Alarmkenndaten innerhalb des mindestens einen Fehlerereignisbereiches und/oder zum Ausschluss des Fehlerereignisbereiches aus der Bestimmung von Ereigniskenndaten durch die Bildanalyseeinheit. Die Markierungseinheit ist software- und/oder hardwaretechnisch ausgebildet. Insbesondere kann die Maskierungseinheit zusammen mit der Berechnungseinheit, der Speichereinheit, der Alarmeinheit und/oder der Bildanalyseeinheit eine gemeinsame Auswerteeinheit bilden.

Es ist dabei eine Überlegung der Erfindung, dass auf Basis des Wissens, dass für die gespeicherten Ereigniskenndaten kein Ereignis im Überwachungsbereich eingetreten ist, die Alarmkenndaten so angepasst werden können und/oder der Fehlerereignisbereich aus der Bestimmung von Ereigniskenndaten durch die Bildanalyseeinheit ausgeschlossen wird, sodass im Folgenden keine Fehlerereignisse mehr als Ereignisse detektiert werden. Es wird somit ein Konzept vorgestellt, wie kritische Bildbereiche ausgeblendet werden und/oder anders ausgewertet werden können. Das Auslösen eines Fehlalarms durch falsch detektierte Ereignisse kann so signifikant reduziert werden. Ferner führt die automatische Anpassung der Alarmkenndaten und/oder das automatische Ausschließen von Bereichen aus der weiteren Bestimmung von Ereigniskenndaten zu einer erheblichen Zeitersparnis gegenüber dem manuellen Einstellen von Bereichen die ausblendet werden sollen.

In einer möglichen Ausgestaltung der Detektionsvorrichtung ist das Verändern der Alarmkenndaten dadurch gekennzeichnet, dass es ein Nichtauswerten eines Fehlerereignisbereiches durch die Alarmeinheit ist. Beispielsweise werden dazu für eine Alarmeinheit, die ein Überschreiten der Alarmkenndaten durch die Ereigniskenndaten prüft, die Alarmkenndaten im Fehlerereignisbereich auf unendlich und/oder einen sehr hohen Wert gesetzt, sodass die Ereigniskenndaten im Fehlerereignisbereich die Alarmkenndaten nicht mehr überschreiten können. Umgekehrt werden beispielsweise die Alarmkenndaten für eine Alarmeinheit, die das Unterschreiten der Alarmkenndaten durch die Ereigniskenndaten prüft, die Alarmkenndaten auf Null oder einen so niedrigen Wert gesetzt, sodass die Ereigniskenndaten die Alarmkenndaten nicht unterschreiten können.

In einer besonders bevorzugten Ausgestaltung der Erfindung umfassen die Ereigniskenndaten Informationen zur Größe, Dauer und/oder zur Stärke eines Ereignisses und/oder Fehlerereignisses. Alternativ oder ergänzend können die Ereigniskenndaten weitere Informationen eines Ereignisses umfassen, wie zum Beispiel eine Geschwindigkeit, eine Richtung, eine Temperatur und/oder eine Turbulenz bestimmt an einer Position im Überwachungsbereich. Insbesondere weisen die Ereigniskenndaten die gleiche Dimension und/oder Einheit wie die Alarmkenndaten auf. Ferner können die Ereigniskenndaten eine Kombination aus mehreren Informationen umfassen.

In einer möglichen Ausgestaltung der Erfindung ist die Berechnungseinheit ausgebildet, nach einer manuellen Veränderung der Alarmkenndaten den mindestens einen Fehlerereignisbereich auf Basis der gespeicherten Ereigniskenndaten und veränderten Alarmkenndaten neu zu berechnen und/oder neu festzulegen. Alternativ oder ergänzend kann das erneute Berechnen oder Festlegen eines Fehlerereignisbereiches auch manuell getriggert werden. Beispielsweise berechnet die Berechnungseinheit nach einer manuellen Änderung der Alarmkenndaten für den gesamten Überwachungsbereich erneut, wo auf Basis der neuen Alarmkenndaten ein Ereignis detektiert würde, obwohl kein Ereignis eingetreten ist und somit, wo ein Fehlerereignisbereich liegt.

In einer besonders bevorzugten Ausgestaltung der Erfindung umfasst die Detektionsvorrichtung ein Userinterface. Das Userinterface ist als eine Mensch-Maschine-Schnittstelle zum Verändern der Alarmkenndaten, insbesondere zum manuellen Verändern der Alarmkenndaten ausgebildet. Beispielsweise ist das Userinterface als ein Embedded Computer ausgeführt. Insbesondere umfasst das Userinterface eine Dateneingabeeinheit wie zum Beispiel eine Tastatur. Alternativ oder ergänzend umfasst das Userinterface einen Touchscreen als Dateneingabeeinheit. Vorzugsweise ist das Userinterface datentechnisch mit der Alarmeinheit verbunden, wobei die datentechnische Verbindung kabelgebunden und/oder kabellos ausgeführt sein kann. Somit ist es möglich, das Userinterface getrennt von Maskierungseinheit, Berechnungseinheit, Speichereinheit, Alarmeinheit und/oder Bildanalyseeinheit anzuordnen. Beispielsweise ist das Userinterface in einem Kontrollraum angeordnet und der Rest der Detektionsvorrichtung in einer Überwachungskamera im Überwachungsbereich angeordnet.

Besonders bevorzugt ist es, dass das Userinterface eine Anzeigeeinheit zum grafischen Anzeigen des Überwachungsbereiches als ein Anzeigebild umfasst. Die grafische Anzeige kann als eine Farbanzeige, Graustufenanzeige, oder Schwarz-Weiß-Anzeige ausgebildet sein. Vorzugsweise ist die Anzeigeeinheit als ein Bildschirm ausgeführt und vorzugsweise als ein Touchscreen-Monitor. Die Anzeigeeinheit zeigt insbesondere das durch die Kameraschnittstelle bereitgestellte Bild des Überwachungsbereiches. Die Anzeigeeinheit ist ausgebildet, den und/oder die für die jeweils aktuell eingestellten Alarmkenndaten berechneten und/oder festgelegten Fehlerereignisbereiche grafisch im Anzeigebild anzuzeigen. Das Anzeigen der Fehlerereignisbereiche kann beispielsweise durch ein Einfärben und/oder Schattieren des betreffenden Bereiches im Anzeigebild beziehungsweise im Bild des Überwachungsbereiches erfolgen. Insbesondere kann die Anzeigeeinheit ausgebildet sein, im Anzeigebild Fehlerereignisbereiche für verschiedene Alarmkenndaten darzustellen, wobei die Darstellung für unterschiedliche Alarmkenndaten beispielsweise durch unterschiedliche Einfärbung und/oder Schraffierung erfolgt.

In einer weiteren Ausgestaltung der Erfindung ist das Userinterface ausgebildet, mittels Nutzereingabe manuell mindestens einen Bereich des Überwachungsbereiches als zusätzlichen Fehleralarmbereich festzulegen. Ist einem Nutzer beispielsweise bekannt, dass in einem Bereich des Überwachungsbereiches Fehlerereignisse gehäuft auftreten, so kann der Nutzer über das Userinterface diesen Bereich als Fehleralarmbereich markieren und so die Maskierungseinheit zum Verändern der Alarmkenndaten innerhalb des durch den Nutzer markierten Fehlerereignisbereiches und/oder zum Ausschluss des durch den Nutzer markierten Fehlerereignisbereiches aus der Bestimmung von Ereigniskenndaten durch die Bildanalyseeinheit triggern. Insbesondere kann die manuelle Nutzereingabe durch grafisches Markieren des entsprechenden Bereiches im Anzeigebild erfolgen, oder durch Eingabe von Koordinaten erfolgen.

In einer möglichen Ausgestaltung der Erfindung umfasst die Detektionsvorrichtung eine Justiereinheit. Insbesondere ist die Justiereinheit als eine softwaretechnische und/oder hardwaretechnische Umsetzung realisiert und beispielsweise in dem Userinterface integriert. Die Justiereinheit ist ausgebildet, die Alarmkenndaten so zu justieren und/oder nachzuregulieren, dass für die gespeicherten Ereigniskenndaten im Überwachungsbereich und dem Wissen, dass für die gespeicherten Ereigniskenndaten kein Ereignis im Überwachungsbereich detektiert wurde, ein Fehlerereignis nicht als Ereignis detektiert wird. Insbesondere kann die Justiereinheit die Alarmkenndaten bereichsweise und/oder positionsabhängig justieren/nachregulieren. Beispielsweise kann die Justiereinheit die Alarmkenndaten in einem detektierten Fehlerereignisbereich so nachregulieren, dass für die nachregulierten Alarmkenndaten kein Fehlerereignis detektiert wird.

In einer besonders bevorzugten Ausgestaltung der Erfindung ist das Ereignis ein Brand und/oder Feuer im Überwachungsbereich. Als Ereigniskenndaten für einen Brand und/oder für ein Feuer im Überwachungsbereich dient beispielsweise die spektrale Verteilung der Temperatur, insbesondere aufgenommen durch eine Infrarotkamera. Alternativ oder ergänzend können bestimmte Lichterscheinungen als Ereigniskenndaten gewählt werden.

In einer weiteren Ausgestaltung der Erfindung ist das zu detektierende Ereignis Rauch im Überwachungsbereich. Insbesondere ist der Rauch von einem Brand und/oder einem Feuer im Überwachungsbereich gebildet. Der Rauch wird durch Rauchemission, insbesondere durch Verbrennungsprodukte des Brandes gebildet. Als Ereigniskenndaten für Rauch können beispielsweise der optische Fluss des Rauches und/oder eines Abschnittes des Rauches gewählt werden. Alternativ können Turbulenzen innerhalb des Rauches als Ereigniskenndaten gewählt werden.

In einer weiteren Ausgestaltung der Erfindung ist das zu detektierende Ereignis im Überwachungsbereich eine sich bewegende Person und/oder ein sich bewegendes Tier. Beispielsweise wird die Geschwindigkeit, als absoluter Betrag und als Richtungsvektor, eines sich bewegenden Objektes im Überwachungsbereich als Ereigniskenndaten gewählt.

Einen weiteren Gegenstand der Erfindung betrifft ein Verfahren zur Detektion eines Ereignisses in einem Überwachungsbereich, welches vorzugsweise durch die Detektionsvorrichtung, wie diese zuvor beschrieben wurde beziehungsweise nach einem der vorhergehenden Ansprüche umgesetzt wird. Bei dem Verfahren wird ein Bild des Überwachungsbereiches ausgewertet und es werden Ereigniskenndaten zu einer beliebigen Position im Überwachungsbereich bestimmt. Es erfolgt eine Ausgabe eines Alarmes auf Basis eines Vergleiches der Ereigniskenndaten mit Alarmkenndaten. Die Ereigniskenndaten werden gespeichert, wobei zu den Ereigniskenndaten die jeweilige Position gespeichert wird, an der sie bestimmt wurden. Es wird auf Basis der Ereigniskenndaten und der Alarmkenndaten berechnet und/oder festgelegt, wo sich ein Fehlerereignisbereich im Überwachungsbereich befindet. Innerhalb des Fehlerereignisbereiches werden die Alarmkenndaten automatisch verändert und/oder der Fehlerereignisbereich wird aus der Bestimmung von Ereigniskenndaten ausgeschlossen.

Einen weiteren Gegenstand der Erfindung bildet ein Computerprogramm mit Programmcodemitteln zur Durchführung des zuvor beschriebenen Verfahrens, vorzugsweise auf einer Detektionsvorrichtung oder auf einer Datenverarbeitungsanlage.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
Figur 1 eine schematisierte Darstellung einer Detektionsvorrichtung;
Figur 2 ein Flussdiagramm eines Verfahrens zur Detektion eines Ereignisses in einem Überwachungsbereich.

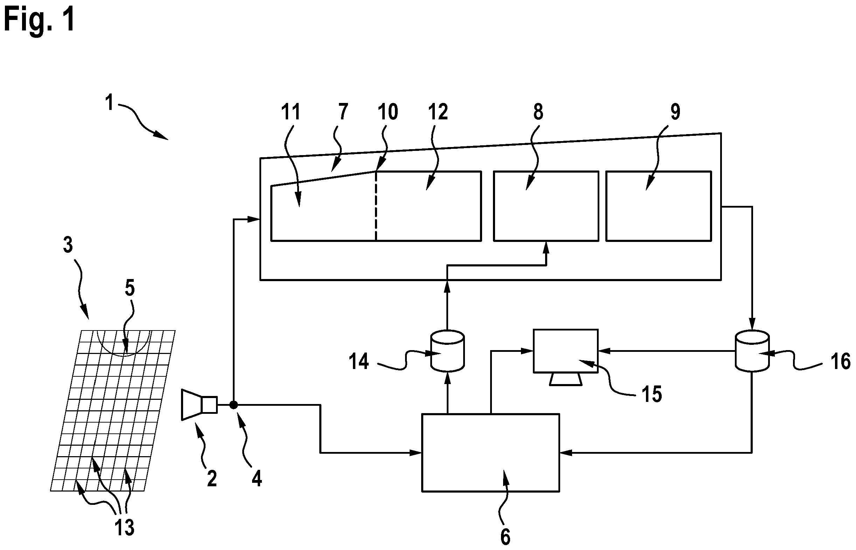

Figur 1 zeigt in einer stark schematisierten Darstellung eine Detektionsvorrichtung 1 als ein Ausführungsbeispiel der Erfindung. Die Detektionsvorrichtung 1 ist als ein automatischer Brandmelder ausgebildet und kann beispielsweise als ein Computer oder eine digitale Datenverarbeitungsanlage mit einem Computerprogramm zur Umsetzung der einzelnen Module realisiert sein.

In Figur 1 ist zudem eine Überwachungskamera 2 gezeigt, wobei die Überwachungskamera 2 so angeordnet ist, dass sie einen Überwachungsbereich 3 abbildet. Die Überwachungskamera 2 kann als eine Schwarz-Weiß-Kamera, eine Farbkamera oder eine Infrarotkamera ausgebildet sein. Die Überwachungskamera 2 kann optional einen integralen Bestandteil der Detektionsvorrichtung 1 bilden. Die Überwachungskamera 2 stellt über eine Kameraschnittstelle 4 der Detektionsvorrichtung 1 mindestens ein Bild des Überwachungsbereiches 3 zur Verfügung. Insbesondere ist die Überwachungskamera 2 ausgebildet, eine Bildfolge aus mehreren Bildern des Überwachungsbereiches 3 bereitzustellen, wobei die Bilder der Bildfolge einen gemeinsamen Abschnitt des Überwachungsbereiches 3 darstellen. Die Bilder der Bildfolge sind in einem zeitlichen Abstand aufgenommen, wobei der zeitliche Abstand ein fester zeitlicher Abstand ist, der sich durch die Frequenz der Überwachungskamera 2 bestimmt. Beispielsweise ist die Überwachungskamera 2 ausgebildet, eine Bildfolge mit mindestens zwei Bildern des Überwachungsbereiches 3 mit einer Frequenz von 30 Hertz aufzunehmen.

Der Überwachungsbereich 3 umfasst einen Fehlerereignisbereich 5, wobei der Fehlerereignisbereich 5 ein Bereich des Überwachungsbereiches 3 ist, für den die Detektionsvorrichtung 1 ein Ereignis, in diesem Ausführungsbeispiel einen Brand, detektiert, obwohl kein Ereignis bzw. Brand im Überwachungsbereich 3 vorliegt. Beispielsweise ist der Fehlerereignisbereich 5 ein Bereich des Überwachungsbereiches 3, der durch eine flackernde Lichtquelle, wie zum Beispiel eine Leuchtstoffröhre, der Detektionsvorrichtung 1 einen Brand vortäuscht.

Über die Kameraschnittstelle 4 werden die Bilder der Überwachungskamera 2 der Detektionsvorrichtung 1 zur Verfügung gestellt. Die Kameraschnittstelle 5 ist datentechnisch mit einer Bildanalyseeinheit 6 und einem Auswertemodul 7 verbunden. Das Auswertemodul 7 umfasst eine Berechnungseinheit 8, eine Maskierungseinheit 9 sowie ein Userinterface 10 mit einer Anzeigeeinheit 11 und einer Eingabeeinheit 12.

Die Bildanalyseeinheit 6 ist softwaretechnisch und/oder hardwaretechnisch ausgebildet, auf Basis des über die Kameraschnittstelle 4 bereitgestellten Bildes den Überwachungsbereich 3 zu rastern. Das Rastern des Überwachungsbereiches 3 entspricht einer matrixartigen Zerlegung in Rasterpositionen 13, wobei jeder Rasterposition 13 von der Bildanalyseeinheit 6 Rasterkoordinaten zugeordnet werden. In Figur 1 sind beispielhaft drei beliebige

Rasterpositionen 13 eingezeichnet. Die Bildanalyseeinheit 6 ist ferner ausgebildet, zu jeder Rasterposition des Überwachungsbereiches 3 Ereigniskenndaten zu bestimmen. Die Ereigniskenndaten umfassen beispielsweise die spektrale Verteilung der Temperatur an einem Rasterpunkt, die Helligkeit und/oder weitere charakteristische Merkmal eines Brandes.

Die Bildanalyseeinheit 6 ist datentechnisch mit einer Speichereinheit 14 zum Speichern der Ereigniskenndaten in der Speichereinheit 14 verbunden. Die Speichereinheit 14 ist insbesondere als ein in die Detektionsvorrichtung 1 integriertes Speichermedium, wie zum Beispiel eine Festplatte, realisiert. Alternativ kann die Speichereinheit 14 auch als ein externes Speichermedium ausgebildet sein, wobei das externe Speichermedium zum Beispiel über eine Funkverbindung mit der Bildanalyseeinheit 6 verbunden ist. Die Speicherung der Ereigniskenndaten erfolgt insbesondere zusammen mit der Position im Überwachungsbereich 3 und/oder zusammen mit der Rasterposition 13 an der sie bestimmt wurden. So sind beispielsweise jedem Rasterpunkt die Ereigniskenndaten zugeordnet und/oder hinterlegt. Insbesondere ist die Speichereinheit 14 ausgebildet, die Ereigniskenndaten mit einem Zeitstempel zu versehen, sodass die Ereigniskenndaten über einen längeren Zeitraum hinterlegbar sind und so beispielsweise der zeitliche Verlauf der Ereigniskenndaten bestimmbar.

Die Bildanalyseeinheit 6 ist datentechnisch mit einer Alarmeinheit 15 verbunden. Die Alarmeinheit 15 ist software- oder hardwaretechnisch ausgebildet, auf Basis eines Vergleichens der Ereigniskenndaten mit in der Alarmeinheit 15 hinterlegten Alarmkenndaten einen Alarm auszugeben. Dazu vergleicht die Alarmeinheit 15 zum Beispiel an jeder Rasterposition 13 die Ereigniskenndaten mit den Alarmkenndaten. Die Alarmeinheit gibt einen Alarm aus, sobald die Ereigniskenndaten die Alarmkenndaten über- oder unterschreiten. Der von der Alarmeinheit 15 ausgegebene Alarm kann ein optisches und/oder akustisches Signal sein.

Die Speichereinheit 14 ist datentechnisch mit der Berechnungseinheit 8 verbunden. Die Berechnungseinheit 8 ist ausgebildet, auf Basis der Ereigniskenndaten und der Alarmkenndaten einen Fehlerereignisbereich 5 zu bestimmen. Die Berechnungseinheit 8 greift dazu beispielsweise auf die Information zurück, dass für die gespeicherten Ereigniskenndaten kein Brand und/oder Ereignis im Überwachungsbereich 3 aufgetreten ist. Diese Information, dass für die gespeicherten Ereigniskenndaten kein Brand und/oder Ereignis im Überwachungsbereich 3 aufgetreten ist, wird beispielsweise durch einen Nutzer zur Verfügung gestellt. Die Berechnungseinheit 8 ist ausgebildet, die Informationen über berechnete und/oder festgelegte Fehlerereignisbereiche 5 im Überwachungsbereich 3 der Maskierungseinheit 9 zur Verfügung zu stellen.

Die Maskierungseinheit 9 ist datentechnisch mit der Alarmeinheit 15 verbunden. Die Maskierungseinheit 9 ist ausgebildet, die Alarmkenndaten in der Alarmeinheit 15 so zu verändern, dass für die, durch die Maskierungseinheit 9, neu eingestellten Alarmkenndaten, ein Ereignis mit den entsprechenden Ereigniskenndaten, das zur Festlegung und/oder Berechnung des Fehlerereignisbereichs 5 führte, von der Alarmeinheit nichtmehr für ein Ereignis und/oder Brand gehalten wird.

Die Maskierungseinheit 9 ist ebenso datentechnisch mit der Bildanalyseeinheit 6 verbunden, um den Bereich des durch die Berechnungseinheit 8 bestimmten Fehlerereignisbereichs 4 von der Bestimmung von Ereigniskenndaten durch die Bildanalyseeinheit 6 auszuschließen. So kann das durch die Bildanalyseeinheit 6 erzeugte Datenvolumen stark reduziert werden.

Das Userinterface 10 umfasst die Anzeigeeinheit 11 und die Eingabeeinheit 12, wobei Anzeigeeinheit 11 und Eingabeeinheit 12 zusammengefasst in einem Touchscreen-Monitor sind. Die Anzeigeeinheit 11 ist datentechnisch mit der Kameraschnittstelle 4 verbunden und ausgebildet, das von der Überwachungskamera 2 jeweils aufgenommene Bild des Überwachungsbereiches 3 in einer Realtime-Darstellung darzustellen. Ferner ist das Userinterface 10 datentechnisch mit der Berechnungseinheit 8 und Maskierungseinheit 9 verbunden, sodass in dem in der Anzeigeeinheit 11 dargestellten Bild des Überwachungsbereiches 3 der Fehlerereignisbereich 4 für die jeweils eingestellten Alarmkenndaten dargestellt und/oder markiert werden kann. Die Darstellung des Fehlerereignisbereiches 5 in dem von der Anzeigeeinheit 11 angezeigten Bild des Überwachungsbereiches 3, kann beispielsweise durch Schraffieren und/oder Einfärbung des entsprechenden Bereiches erfolgen.

Durch die Eingabeeinheit 12 kann ein Nutzer durch Nutzereingabe mindestens einen weiteren Fehlerereignisbereich 4 im Überwachungsbereich 3 festlegen. Dies erfolgt beispielsweise durch die Auswahl und/oder Markierung des entsprechenden Bereiches in der Anzeige des Bildes des Überwachungsbereiches 3. Der so hinzugefügte Markierungsbereich wird analog zu dem durch die Berechnungseinheit 8 bestimmten Markierungsbereich an die Alarmeinheit 15 und die Bildanalyseeinheit 6 weitergeleitet. Dies kann beispielsweise nützlich sein, wenn ein Nutzer weiß, dass in einem bestimmten Bereich eine neue Quelle für Fehldetektion und/oder Fehlalarme hinzukommt.

Zwischen Maskierungseinheit 9, Alarmeinheit 15 und Bildanalyseeinheit 6 ist noch eine Maskierungsspeichereinheit 16 angeordnet. Die Maskierungsspeichereinheit 16 ist als ein in die Detektionsvorrichtung 1 integrierte Speichereinheit ausgebildet oder als ein externes Speichermedium, das über eine Funk- oder Kabeldatenverbindung mit der Maskierungseinheit 9 verbunden ist. Die Maskierungsspeichereinheit 16 ist ausgebildet, die/den von der Berechnungseinheit 8 berechneten und/oder festgelegten Fehlerereignisbereiche 5 sowie die von der Markierungseinheit 9 geänderten Alarmkenndaten und von der Bestimmung von Ereigniskenndaten auszuschließenden Bereich abzuspeichern.

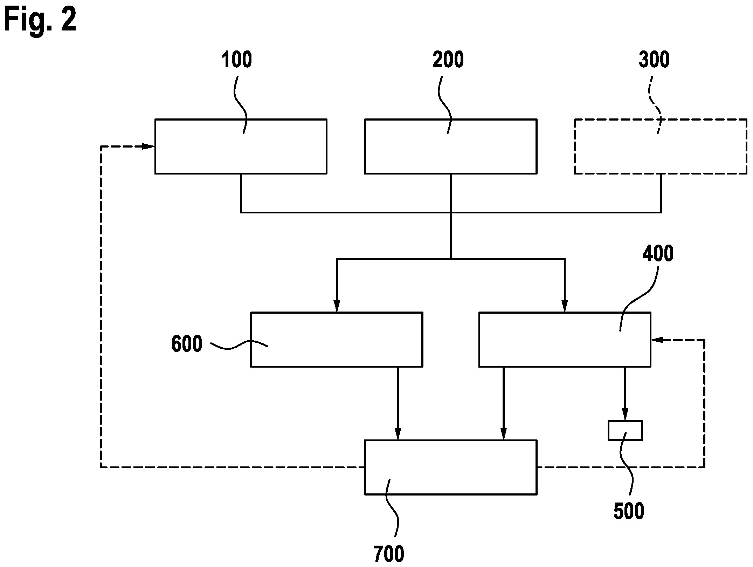

Figur 2 zeigt ein Flussdiagramm eines auf einem Vergleich von Alarmkenndaten und Ereigniskenndaten basierenden Verfahrens zur Bestimmung eines Ereignisses in einem Überwachungsbereich 3.

In einem Ereigniskenndatenbestimmungsschritt 100 des Verfahrens wird ein Bild des Überwachungsbereiches 3 ausgewertet, wobei diese Auswertung die Bestimmung von Ereigniskenndaten umfasst. Die Ereigniskenndaten umfassen Kenndaten, die das zu detektierende Ereignis aussagekräftig charakterisieren.

Parallel zu dem Ereigniskenndatenbestimmungsschritt 100 wird in einem Positionsbestimmungsschritt 200 der Überwachungsbereich 3 gerastert und Rasterpositionen 13, wobei die Rasterpositionen 13 die Positionen im Überwachungsbereich 3 sind, für die Ereigniskenndaten bestimmt werden. Diesem Positionsbestimmungsschritt 200 kann Zusatzdatenbestimmungsschritt 300 zur Bestimmung von Zusatzinformationen an den Rasterpositionen 13 parallel gestellt werden. Die Zusatzinformationen umfassen beispielsweise Daten, die weitere Informationen bezüglich der Bildaufnahme, der Bildauswertung und/oder das zu bestimmende Ereignis beinhalten. Diese Zusatzinformationen sind beispielsweise die Sensitivität der Detektionsvorrichtung 1 und/oder Überwachungskamera 3, die Größe des Ereignisses im Überwachungsbereich 3 oder ein Zeitstempel.

Die im Ereigniskenndatenbestimmungsschritt 100, Positionsbestimmungsschritt 200 und Zusatzinformationsbestimmungsschritt 300 bestimmten Daten werden in einem Alarmierungsschritt 400 ausgewertet. In dem Alarmierungsschritt 400 wird geprüft, ob die Ereigniskenndaten gewisse Alarmkenndaten über- oder unterschreiten. Im Alarmierungsschritt 400 wird beispielsweise eine Alarmauslösung 500 ausgelöst, wenn die Alarmkenndaten von den Ereigniskenndaten überschritten werden. Kein Alarm wird ausgelöst, wenn die Alarmkenndaten von den Ereigniskenndaten unterschritten werden. Die im Ereigniskenndatenbestimmungsschritt 100, im Positionsbestimmungsschritt 200 und im Zusatzinformationsbestimmungsschritt 300 bestimmten Daten werden in einem Speicherschritt 600 gespeichert. Insbesondere werden die dort bestimmten Daten als Datentupel bestimmt. Beispielsweise umfasst das Datentupel Rasterposition 13, Ereigniskenndaten und Zusatzkenndaten. Die gespeicherten Daten des Datentupels, sowie die Daten des Alarmierungsschrittes 400 werden in einem Maskierungsschritt 700 ausgewertet. Im Maskierungsschritt 700 wird auf Basis der Ereigniskenndaten und der Alarmkenndaten berechnet und/oder festgelegt, wo sich im Überwachungsbereich 3 ein Fehlerereignisbereich 5 befindet. Der so bestimmte Fehlerereignisbereich 5 wird an dem Ereigniskenndatenbestimmungsschritt 300
und den Alarmierungsschritt 400 weitergeleitet. Der Maskierungsschritt 700 passt somit im Ereigniskenndatenbestimmungsschritt 100 den Bereich an, für den im Folgenden eine Auswertung und/oder Bestimmung von Ereigniskenndaten erfolgt. Zusätzlich kann der Maskierungsschritt 700 auf die Alarmkenndaten des Alarmierungsschrittes 400 zugreifen, wobei die Alarmkenndaten so angepasst werden, dass für die im Speicherschritt 600 gespeicherten Ereigniskenndaten kein Ereignis detektiert wird.

## Patentansprüche

1. Detektionsvorrichtung (1) zur Detektion eines Ereignisses in einem Überwachungsbereich (3),
mit einer Kameraschnittstelle (4) zur Übernahme mindestens eines Bildes, wobei das mindestens eine Bild den Überwachungsbereich (3) zeigt, mit einer Bildanalyseeinheit (6), wobei die Bildanalyseeinheit (6) ausgebildet ist, auf Basis des Bildes zu mindestens einer beliebigen Position im Überwachungsbereich (3) Ereigniskenndaten zu bestimmen, mit einer Alarmeinheit (15) mit Alarmkenndaten, wobei die Alarmeinheit (15) ausgebildet ist, auf Basis eines Vergleiches der Alarmkenndaten mit den Ereigniskenndaten einen Alarm festzulegen,
mit einer Speichereinheit (14), wobei die Speichereinheit (14) ausgebildet ist, zu der mindestens einen beliebigen Position im Überwachungsbereich (3) die Ereigniskenndaten zu speichern,
**gekennzeichnet durch**
eine Berechnungseinheit (8), zur Berechnung und/oder Festlegung von mindestens einem Fehlerereignisbereich (5) auf Basis der Ereigniskenndaten und der Alarmkenndaten, wobei der Fehlerereignisbereich (5) ein Bereich des Überwachungsbereiches (3) ist, in dem das Ereignis bei gewählten Alarmkenndaten detektiert wird, obwohl das Ereignis nicht vorliegt,
mit einer Maskierungseinheit (9) zum automatischen Verändern der Alarmkenndaten innerhalb des mindestens einen Fehlerereignisbereichs (5) und/oder zum Ausschluss des Fehlerereignisbereiches (5) aus der Bestimmung von Ereigniskenndaten durch die Bildanalyseeinheit (6).

2. Detektionsvorrichtung (1) nach Anspruch 1, **dadurch gekennzeichnet, dass** das Verändern der Alarmkenndaten durch die Maskierungseinheit (9) ein Nichtauswerten eines Fehlerereignisbereichs (5) durch die Alarmeinheit (15) ist.

3. Detektionsvorrichtung (1) nach einem der Ansprüche 1 oder 2, **dadurch gekennzeichnet, dass** die Ereigniskenndaten Informationen zur Größe, Dauer und/oder Stärke eines Ereignisses und/oder Fehlerereignisses umfassen.

4. Detektionsvorrichtung (1) nach einem der vorhergehenden Ansprüche, **dadurch gekennzeichnet, dass** die Berechnungseinheit (8) ausgebildet ist, nach einer manuellen Veränderung der Alarmkenndaten den mindestens einen Fehlerereignisbereich (5) auf Basis der Ereigniskenndaten neu zu berechnen und/oder neu festzulegen.

5. Detektionsvorrichtung (1) nach einem der vorhergehenden Ansprüche, **gekennzeichnet durch** ein Userinterface (10), wobei das Userinterface (10) als Mensch-Maschine-Schnittstelle zum Verändern der Alarmkenndaten der Alarmeinheit (15) ausgebildet ist.

6. Detektionsvorrichtung (1) nach Anspruch 5, **dadurch gekennzeichnet, dass** das Userinterface (10) eine Anzeigeeinheit (11) zum graphischen Anzeigen des Überwachungsbereiches (3) als Anzeigebild umfasst, wobei die Anzeigeeinheit (11) ausgebildet ist, die für die jeweils aktuell eingestellten Alarmkenndaten berechneten und/oder festgelegten Fehlereignisbereiche graphisch im Anzeigebild anzuzeigen.

7. Detektionsvorrichtung (1) nach einem der Ansprüche 5 oder 6, **dadurch gekennzeichnet, dass** das Userinterface (10) ausgebildet ist, mittels Nutzereingabe manuell mindestens einen Bereich des Überwachungsbereiches (3) als zusätzlichen Fehlerereignisbereich (5) festzulegen.

8. Detektionsvorrichtung (1) nach einem der Ansprüche 5 bis 7, **dadurch gekennzeichnet, dass** über das Userinterface (10) der Speichereinheit (14) eine Speicherzeit manuell einstellbar ist, wobei die Speicherzeit der Zeitdauer der durch die Speichereinheit (14) gespeicherten Ereigniskenndaten entspricht.

9. Detektionsvorrichtung (1) nach einem der vorhergehenden Ansprüche, **gekennzeichnet durch** eine Justiereinheit, wobei die Justiereinheit ausgebildet ist die Alarmkenndaten so zu justieren, dass auf Basis der gespeicherten Ereigniskenndaten im Überwachungsbereich (3) ein Fehlerereignis nicht als Ereignis detektiert wird.

10. Detektionsvorrichtung (1) nach einem der vorhergehenden Ansprüche, **dadurch gekennzeichnet, dass** das Ereignis ein Brand im Überwachungsbereich (3) ist.

11. Detektionsvorrichtung (1) nach einem der vorhergehenden Ansprüche 1 bis 9, **dadurch gekennzeichnet, dass** das Ereignis Rauch im Überwachungsbereich (3) ist.

12. Detektionsvorrichtung (1) nach einem der vorhergehenden Ansprüche 1 bis 9, **dadurch gekennzeichnet, dass** das Ereignis eine Person im Überwachungsbereich (3) ist.

13. Verfahren zur Detektion eines Ereignisses mit einer Detektionsvorrichtung (1) nach einem der vorhergehenden Ansprüche, wobei ein Bild des Überwachungsbereiches (3) ausgewertet wird und zu einer beliebigen Position im Überwachungsbereich (3) Ereigniskenndaten bestimmt werden, wobei eine Ausgabe eines Alarmes auf Basis eines Vergleiches der Ereigniskenndaten mit Alarmkenndaten erfolgt, wobei die Ereigniskenndaten gespeichert werden und die Position im Überwachungsbereich (3) zu den Ereigniskenndaten gespeichert wird, wobei auf Basis der Ereigniskenndaten und der Alarmkenndaten berechnet und/oder festgelegt wird, wo sich im Überwachungsbereich (3) ein Fehlerereignisbereich (5) befindet, und wobei im Fehlerereignisbereich (5) die Alarmkenndaten automatisch verändert werden und/oder der Fehlerereignisbereich (5) aus der weiteren Bestimmung von Ereigniskenndaten ausgeschlossen wird.

14. Computerprogramm mit Programmcode-Mitteln, um alle Schritte des Verfahrens nach Anspruch 13 durchzuführen, wenn das Programm auf einem Computer und/oder auf der Detektionsvorrichtung (1) von jedem Beliebigen der Ansprüche 1 bis 12 ausgeführt wird

## Claims

1. Detection device (1) for detection of an event in a monitoring area (3),
with a camera interface (4) for transferring at least one image, wherein the at least one image shows the monitoring area (3),
with an image analysis unit (6), wherein the image analysis unit (6) is configured to determine event specifications for at least any one position in the monitoring area (3) on the basis of the image,
with an alarm unit (15) with alarm specifications, wherein the alarm unit (15) is configured to define an alarm on the basis of a comparison of the alarm specifications with the event specifications,
with a storage unit (14), wherein the storage unit (14) is configured to store the event specifications for the
at least any one position in the monitoring area (3), **characterized by**
a calculation unit (8) for calculating and/or defining at least one false event area (5) on the basis of the event specifications and the alarm specifications, wherein the false event area (5) is an area of the monitoring area (3) in which the event is detected with selected alarm specifications even though the event has not actually occurred.
with a masking unit (9) for the automatic modification of the alarm specifications within the at least one false event area (5) and/or for the exclusion of the false event area (5) from the determination of event specifications by the image analysis unit (6).

2. Detection device (1) according to Claim 1, **characterized in that** the modification of the alarm specifications by the masking unit (9) is a non-evaluation of a false event area (5) by the alarm unit (15) .

3. Detection device (1) according to one of Claims 1 and 2, **characterized in that** the event specifications comprise information relating to the magnitude, duration and/or intensity of an event and/or false event.

4. Detection device (1) according to one of the preceding claims, **characterized in that** the calculation unit (8) is configured, following a manual modification of the alarm specifications, to recalculate and/or redefine the at least one false event area (5) on the basis of the event specifications.

5. Detection device (1) according to one of the preceding claims, **characterized by** a user interface (10), wherein the user interface (10) is configured as a man-machine interface for modification of the alarm specifications of the alarm unit (15).

6. Detection device (1) according to Claim 5, **characterized in that** the user interface (10) comprises a display unit (11) for the graphical display of the monitoring area (3) as a display image, wherein the display unit (11) is configured for the graphical display in the display image of the false event areas calculated and/or defined for the respective currently set alarm specifications.

7. Detection device (1) according to one of Claims 5 and 6, **characterized in that** the user interface (10) is configured to define manually by means of user input at least one area of the monitoring area (3) as an additional false event area (5).

8. Detection device (1) according to one of Claims 5 to 7, **characterized in that** a storage time is manually settable via the user interface (10) of the storage unit (14), wherein the storage time corresponds to the time duration of the event specifications stored by the storage unit (14).

9. Detection device (1) according to one of the preceding claims, **characterized by** an adjustment unit, wherein the adjustment unit is configured to adjust the alarm specifications in such a way that a false event is not detected as an event on the basis of the stored event specifications in the monitoring area (3).

10. Detection device (1) according to one of the preceding claims, **characterized in that** the event is a fire in the monitoring area (3).

11. Detection device (1) according to one of the preceding Claims 1 to 9, **characterized in that** the event is smoke in the monitoring area (3).

12. Detection device (1) according to one of the preceding Claims 1 to 9, **characterized in that** the event is a person in the monitoring area (3).

13. Method for- detection of an event with a detection device (1) according to one of the preceding claims, wherein an image of the monitoring area (3) is evaluated and event specifications are determined for any position in the monitoring area (3), wherein an alarm is output on the basis of a comparison of the event specifications with alarm specifications, wherein the event specifications are stored and the position in the monitoring area (3) is stored for the event specifications, wherein the location of a false event area (5) in the monitoring area (3) is calculated and/or defined on the basis of the event specifications and the alarm specifications, and wherein the alarm specifications are automatically modified in the false event area (5) and/or the false event area (5) is excluded from the further determination of event specifications.

14. Computer program with program code means to carry out all steps of the method according to Claim 13 when the program is executed on a computer and/or on the detection device (1) of any one of Claims 1 to 12.

## Revendications

1. Dispositif de détection (1) pour la détection d'un événement dans une zone de surveillance (3), comportant
une interface de caméra (4) pour l'enregistrement d'au moins une image, l'au moins une image montrant la zone de surveillance (3),
une unité d'analyse d'images (6), l'unité d'analyse d'images (6) étant conçue pour, sur la base de l'image, pour au moins une position quelconque dans la zone de surveillance (3), déterminer les données caractéristiques d'événement,
une unité d'alarme (15) comportant des données de caractéristiques d'alarme, l'unité d'alarme (15) étant conçue pour définir une alarme sur la base d'une comparaison des données caractéristiques d'alarme et des données caractéristiques d'événement,
une unité de mémoire (14), l'unité de mémoire (14) étant conçue pour sauvegarder les données caractéristiques d'événement pour l'au moins une position quelconque dans la zone de surveillance (3),
**caractérisé par**
une unité de calcul (8) pour calculer et/ou pour définir au moins une zone d'événement d'erreur (5) sur la base des données caractéristiques d'événement et des données caractéristiques d'alarme, la zone d'événement d'erreur (5) étant une zone de la zone de surveillance (3) dans laquelle l'événement est détecté lorsque des données caractéristiques d'alarme sont sélectionnées bien que l'événement n'existe pas,
une unité de masquage (9) pour la modification automatique des données caractéristiques d'alarme dans l'au moins une zone d'événement d'erreur (5) et/ou pour l'exclusion de la zone d'événement d'erreur (5) de la détermination des données caractéristiques d'événement par l'unité d'analyse d'images (6).

2. Dispositif de détection (1) selon la revendication 1, **caractérisé en ce que** la modification des données caractéristiques d'alarme par l'unité de masquage (9) est une non-exploitation d'une zone d'événement d'erreur (5) par l'unité d'alarme (15).

3. Dispositif de détection (1) selon une des revendications 1 ou 2, **caractérisé en ce que** les données caractéristiques d'alarme comprennent des informations sur l'amplitude, la durée et/ou l'intensité d'un événement et/ou d'un événement d'erreur.

4. Dispositif de détection (1) selon une des revendications précédentes, **caractérisé en ce que** l'unité de calcul (8) est conçue pour, après une modification manuelle des données caractéristiques d'alarme, recalculer et/ou redéfinir l'au moins une zone d'événement d'erreur (5) sur la base des données caractéristiques d'événement.

5. Dispositif de détection (1) selon une des revendications précédentes, **caractérisé par** une interface d'utilisateur (10), l'interface d'utilisateur (10) étant réalisée sous forme d'une interface homme-machine pour la modification des données caractéristiques d'alarme de l'unité d'alarme (15).

6. Dispositif de détection (1) selon la revendication 5, **caractérisé en ce que** l'interface d'utilisateur (10) comprend une unité d'affichage (11) pour l'affichage graphique de la zone de surveillance (3) sous forme d'écran d'affichage, l'unité d'affichage (11) étant conçue pour afficher graphiquement dans l'écran d'affichage les zones d'événement d'erreur calculées et/ou définies pour les données caractéristiques d'alarme respectivement actuellement paramétrées.

7. Dispositif de détection (1) selon une des revendications 5 ou 6, **caractérisé en ce que** l'interface d'utilisateur (10) est conçue pour, au moyen d'une saisie d'utilisateur, définir manuellement au moins une zone de la zone de surveillance (3) comme zone supplémentaire d'événement d'erreur (5).

8. Dispositif de détection (1) selon une des revendications 5 à 7, **caractérisé en ce que**, par l'intermédiaire de l'interface utilisateur (10) de l'unité de mémoire (14), une durée de sauvegarde est réglable manuellement, la durée de sauvegarde correspondant à la durée des données caractéristiques d'événement sauvegardées par l'unité de mémoire (14).

9. Dispositif de détection (1) selon une des revendications précédentes, **caractérisé par** une unité de réglage, l'unité de réglage étant conçue pour régler les données caractéristiques d'alarme de manière à ce que, sur la base des données caractéristiques d'alarme sauvegardées dans la zone de surveillance (3), un événement d'erreur ne soit pas détecté comme événement.

10. Dispositif de détection (1) selon une des revendications précédentes, **caractérisé en ce que** l'événement est un incendie dans la zone de surveillance (3).

11. Dispositif de détection (1) selon une des revendications 1 à 9, **caractérisé en ce que** l'événement est de la fumée dans la zone de surveillance (3).

12. Dispositif de détection (1) selon une des revendications 1 à 9, **caractérisé en ce que** l'événement est une personne dans la zone de surveillance (3).

13. Procédé de détection d'un événement au moyen d'un dispositif de détection (1) selon une des revendications précédentes, dans lequel une image de la zone de surveillance (3) est exploitée et des données caractéristiques d'événement sont déterminées pour une position quelconque dans la zone de surveillance (3), une émission d'une alarme ayant lieu sur la base d'une comparaison des données caractéristiques d'événement avec les données caractéristiques d'alarme, les données caractéristiques d'événement étant sauvegardées et la position dans la zone de surveillance (3) étant sauvegardée pour les données caractéristiques d'événement, sachant que, sur la base des données caractéristiques d'événement et des données caractéristiques d'alarme, il est calculé et/ou établi où une zone d'événement d'erreur (5) se trouve dans la zone de surveillance (3) et que, dans la zone d'événement d'erreur (5), les données caractéristiques d'alarme sont automatiquement modifiées et/ou la zone d'événement d'erreur (5) est exclue de la suite de la détermination des données caractéristiques d'événement.

14. Programme informatique comportant des moyens de codage de programme pour exécuter toutes les étapes du procédé selon la revendication 13 lorsque le programme est exécuté sur un ordinateur et/ou sur le dispositif de détection (1) selon l'une quelconque des revendications 1 à 12.
